# Europäisches Patentamt

# European Patent Office

# Office européen des brevets

(19)

(11) Veröffentlichungsnummer: **0 081 669**
**B1**

(12) **EUROPÄISCHE PATENTSCHRIFT**

(45) Veröffentlichungstag der Patentschrift:
**08.10.86**

(21) Anmeldenummer: **82110185.4**

(22) Anmeldetag: **05.11.82**

(51) Int. Cl.⁴: **B 01 D 53/22**, C 01 B 3/50,
G 21 C 19/30

(54) Wasserstoff-Diffusionsmembran und Diffusionsverfahren zur Abtrennung von Wasserstoff aus Gasgemischen.

(30) Priorität: **11.12.81 DE 3149155**
**11.12.81 DE 3149084**

(43) Veröffentlichungstag der Anmeldung:
**22.06.83 Patentblatt 83/25**

(45) Bekanntmachung des Hinweises auf die Patenterteilung:
**08.10.86 Patentblatt 86/41**

(84) Benannte Vertragsstaaten:
**DE FR GB**

(56) Entgegenhaltungen:
**DE - A - 1 558 409**
**GB - A - 1 346 422**
**US - A - 3 350 846**
**US - A - 3 439 474**

(73) Patentinhaber: **Kernforschungsanlage Jülich Gesellschaft mit beschränkter Haftung, Postfach 1913, D-5170 Jülich 1 (DE)**

(72) Erfinder: **Behr, Friedrich, Dr., Bredeneyer Strasse 26, D-4600 Essen 1 (DE)**
Erfinder: **Schulten, Rudolf, Prof. Dr., Karl Friedrich-Strasse 4, D-5100 Aachen-Richterich (DE)**
Erfinder: **Weyrich, Walter, Dr., Krefelder Strasse 62, D-5100 Aachen (DE)**

**Beschreibung**

Die Erfindung bezieht sich auf eine Wasserstoff-Diffusionsmembran aus einem selektiv für Wasserstoff durchlässigen, nichtporösen Material mit einer Beschichtung aus einer Legierung von Palladium mit ≥ 45 Atom-% Cu oder ≥ 50 Atom-% Ag oder ≥ 7 Atom-% Y auf der Wasserstoffzutrittsseite der Membran aus einem Kupfer bzw. Silber bzw. Yttrium unter Verarmung der Beschichtung lösenden Material sowie auf ein Verfahren zur Abtrennung von Wasserstoff aus Gasgemischen durch Diffusion bei erhöhter Temperatur durch eine nichtporöse Membran mit einer primärseitigen Beschichtung mit einer Palladiumlegierung.

Die Abtrennung von Wasserstoff (aus Gasgemischen oder aus einem Elektrolyten im Zusammenhang mit seiner kathodischen Abscheidung) durch Diffusion durch eine Membran aus Palladium oder Palladiumlegierung ist bekannt. So wird in der US-A-3 439 474 eine Palladiumkupfermembran beschrieben, die 30 bis 60 Gew.% Kupfer und insbesondere 40 Gew.% Cu enthalten soll. Aus der GB-A-1 346 422 geht eine Palladiumyttriummembran mit bis zu 12 Atom-% Yttrium und insbesondere 7 bis 9 Atom-% Y hervor, die als Diffusionswand zur Abtrennung von Wasserstoff empfohlen wird.

Palladium und Palladiumlegierungen sind sehr teuer. Man kennt daher auch bereits Diffusionswände aus anderen wasserstoffdurchlässigen Materialien, die nur auf der Gaszufuhrseite bzw. der mit der Gasmischung beaufschlagten Seite mit einer dünnen Schicht aus Palladium oder Palladiumlegierung belegt sind (s. US-A-3 407 571). Als Beispiel für eine solche primärseitige dünne Palladiumlegierungsschicht (auf Stahl) wird eine Schicht von Palladiumsilber genannt, das bis zu 60% Ag, insbesondere aber 10 bis 50% Ag, enthalten soll. Zur Beschleunigung der Diffusion sollen solche Wände insbesondere bei erhöhter Temperatur angewandt werden, die bis etwa 820 °C reichen kann, wobei Temperaturen um 150 bis 160 °C bevorzugt sind. Ferner soll insbesondere eine Druckdifferenz zwischen Primär- und Sekundärseite aufrechterhalten werden, die zumindest bei etwa 1 bar liegt und vorzugsweise bis etwa 100 bar reichen kann.

Ferner ist aus der US-A 3 350 846 eine nichtporöse metallische Wasserstoffdiffusionstrennwand aus einem Metall der Vb-Gruppe des Periodensystems, insbesondere aus Vanadium, Tantal oder Niob bekannt, die beidseits mit einer dünnen Schicht aus Palladium oder einer Palladiumlegierung mit Silber, Gold oder Bor beschichtet ist. Als Ersatz für das insbesondere empfohlene Palladium wird dabei eine Palladiumsilberlegierung mit etwa 10 bis 50 Gew.% Silber bevorzugt. Die Dicke der Beschichtung soll etwa 100 bis etwa 1000 Å betragen, während die Membran selbst etwa 25 µm bis etwa 500 µm dick ist.

Solche mit Palladium oder Palladiumlegierung beschichteten Membranen haben den Nachteil, dass beim Betrieb bei erhöhten Temperaturen über längere Zeiten hinweg ein Eindiffundieren der gaszufuhrseitigen Palladiumschicht oder Palladiumlegierungsschicht in das Hauptmembranmaterial hinein stattfindet, so dass die Schutz- und Dissoziationswirkung der Palladiumbeschichtung nachlässt bzw. entfällt.

Ziel der Erfindung ist daher eine Wasserstoff-Diffusionsmembran, die auch bei erhöhter Temperatur und über längere Zeit hinweg brauchbar bleibt.

Die zu diesem Zweck entwickelte erfindungsgemässe Membran der eingangs genannten Art ist dadurch gekennzeichnet, dass die Membran selbst den jeweiligen Legierungspartner Cu, Ag bzw. Y in einer mit der Palladiumlegierung bei Betriebstemperatur zumindest im Gleichgewicht befindlichen Konzentration aufweist.

Bei dieser Membran wird durch die Gleichgewichtskonzentration bzw. insbesondere Sättigung des Membranmaterials mit einem oder ggf. mehreren der Metalle Kupfer, Silber, Yttrium dafür gesorgt, dass deren Anteil in der palladiumhaltigen Beschichtung im Verlaufe der Zeit nicht unter die angegebenen Minimalkonzentrationen absinken kann. Auf diese Weise wird das Palladium, dessen Beweglichkeit bei den angegebenen Minimalkonzentrationen an Cu bzw. Ag bzw. Y stark reduziert ist, praktisch an der Oberfläche «blokkiert»: eine Verarmung der Beschichtung an Kupfer bzw. Silber oder Yttrium durch Abwanderung in das Hauptmembranmaterial, das selbst bei relativ geringer Löslichkeit für diese Metalle in Anbetracht der Dickenunterschiede zwischen der Membran selbst und ihrer Beschichtung zumindest einen hohen Anteil derselben aufnimmt, würde dagegen zu einer zunehmenden Beweglichkeit des Palladiums selbst führen, das dann ebenfalls in die Membran bzw. Wand hineindiffundiert.

Die Pd/Cu-Beschichtung der Diffusionswand soll zumindest 45 At.% Kupfer enthalten, wobei Legierungen mit 45 bis 72 At.% Cu, Rest Pd zweckmässig sind. Silberhaltige Beschichtungen enthalten zwischen 50 und 75 At.% Ag. Bei Yttrium enthaltenden Beschichtungen liegt der Yttriumanteil bei 7,1 bis 16,4 At.% der Pd/Y-Legierung. Solche Pd/Y-Schichten zeichnen sich durch eine besonders günstige Permeabilität für Wasserstoff aus.

Aufgrund der hohen theoretischen Diffusionsraten von Wasserstoff und seinen Isotopen in Tantal und/oder Niob erscheinen diese als die geeignetsten Hauptmembranmaterialien. Kupfer und auch Silber sind in ihnen kaum löslich und bilden mit ihnen keine Mischkristalle (in Niob beträgt die nur wenig temperaturabhängige Löslichkeit von Kupfer z.B. 4,3 At.% bei 0 °C bzw. 10 At.% bei 1100 °C). Palladium selbst ist zwar in Niob bzw. Tantal löslich, Palladiumlegierungen mit Kupfer bzw. Silber in den angegebenen Mengen bleiben jedoch unverändert auf der Wandoberfläche. Diese Palladiumlegierungen haben bekanntermassen hohe Wasserstoff-Diffusionskoeffizienten und günstige Wasserstofflöslichkeiten. Für kerntechnische Anlagen ist Kupfer als Legierungspartner dem Silber vorzuziehen.

In einem praktischen Versuch wurde festgestellt, dass sich eine gasseitig auf Tantal und auch auf Niob (die jeweils bei Betriebstemperatur mit Kupfer gesättigt waren) aufgebrachte etwa 1,5 μm dicke Schicht aus ca. 55 At.% Kupfer und 45 At.% Palladium bei einer Glühdauer von zehn Tagen bei ca. 590 °C nicht in der Zusammensetzung veränderte. Um auch bei sehr langen Betriebszeiten keine intermetallischen Diffusionserscheinungen zwischen der Pd-haltigen Oberflächenschicht und dem Tantal oder Niob (als Hauptmaterial) zu erhalten, wird man solche Membranen bei etwa 180 °C bis etwa 450 °C verwenden.

In einem Langzeitversuch wurde ein mit ~ 1 μm PdCu (40 Atom-% : 60 Atom-%) beschichtetes, bei 400 °C mit Cu gesättigtes 1 mm Tantalblech 4000 Stunden bei 400 °C im Vakuum belassen. Die anschliessende metallographische Untersuchung zeigte eine noch völlig intakte Struktur der beschichteten Diffusionswand.

Es ist sinnvoll, die gasseitige Oberfläche noch zusätzlich (insbesondere mit Hilfe von Metallen) in bekannter Weise so zu aktivieren, dass die Wasserstoff- bzw. Tritiumaufnahme nicht durch adsorbierte Gase des primären Gasgemisches behindert wird. Eine Darstellung üblicher Aktivierungsmethoden findet sich bei W. Vielstich, Brennstoffelemente (1965), Verlag Chemie, Seite 68ff.

Es wurde weiterhin gefunden, dass Legierungen existieren, die über geeignetere Wasserstoff- und damit auch Tritiumpermeationseigenschaften für sehr kleine $H_2$/HT-Partialdrücke der Gasphase – wie beim HTR vorgegeben – verfügen als z. B. reines Tantal, wenn sie ebenso gasseitig mit einer Cu/Pd-Schicht versehen werden. Sie haben weiterhin den Vorzug, dass eine zusätzliche Aktivierung wegen der hohen Temperaturen entfallen kann:

Bei höheren Temperaturen als etwa 400 °C werden zweckmässigerweise Legierungen für die Membran verwendet, die hohe Anteile an Tantal und/oder Niob neben Vanadium und Titan enthalten und zusätzlich so hoch wie möglich mit Kupfer oder evtl. Silber legiert sind. Diese Legierungen ähneln den in der US-PS 3 128 178 als korrosions- bzw. säurefest bezeichneten Legierungen, die mindestens 30 Gew.% und vorzugsweise etwa 68 bis 70 Gew.% Tantal enthalten. Daneben enthalten die Legierungen 10 bis 30 Gew.% Titan, 3 bis 10 Gew.% Vanadium und 0,5 bis 3 Gew.% Nickel. Gefunden wurde nun, dass man, statt Nickel zuzugeben, diese Legierungen mit Kupfer sättigen kann, ohne dass sie verspröden.

Dieser Legierungstyp eignet sich insbesondere als Membranmaterial für die Abtrennung von $H_2$/HT (mit sehr kleinen Partialdrücken) aus dem Primärkreisgasgemisch eines Hochtemperaturreaktors bei Temperaturen von etwa 450 bis 600 °C. Beispielsweise wurde eine Legierung mit den Atomteilen $Ti_{0,5}$ $Ta_{0,3}$ $Cu_{0,1}$ $V_{0,1}$ unter Argon bei ca. 2000 °C erschmolzen, wobei ein geringer Teil des zugegebenen Kupfers nicht aufgenommen wurde, sondern verdampfte. Sie besitzt eine hohe Löslichkeit für Wasserstoff, ohne bei 300 °C und darüber im Druckbereich bis zu einem bar eine Hydridphase auszubilden. Löslichkeitsmessungen ergaben beispielsweise für die 400 °C-Isotherme folgende Werte, wobei n die Zahl der gelösten Wasserstoffatome pro Metallatom und p der Wasserstoffpartialdruck – im Gleichgewicht gemessen – in [b] sind:

| p | $10^{-6}$ | $10^{-5}$ | $10^{-4}$ | $10^{-3}$ |
|---|---|---|---|---|
| n | $10^{-2}$ | $3 \cdot 10^{-2}$ | $10^{-1}$ | $3 \cdot 10^{-1}$ |

für die 500 °C-Isotherme wurde gefunden:

| p | $10^{-5}$ | $10^{-4}$ | $10^{-3}$ | $10^{-2}$ |
|---|---|---|---|---|
| n | $10^{-2}$ | $3 \cdot 10^{-2}$ | $9 \cdot 10^{-2}$ | $2,5 \cdot 10^{-1}$ |

Diese Legierung besitzt für Wasserstoff eine um mehr als eine Grössenordnung höhere Löslichkeit als z. B. die reinen Metalle Tantal, Niob oder Vanadium. Der H-Diffusionskoeffizient ist geringer. Er lässt sich noch durch Variation der einzelnen Metallanteile in Bezug auf die Permeationsraten verbessern. In Glühversuchen bei 600 °C konnte bisher keine intermetallische Diffusion zwischen der gasseitigen Cu/Pd-Deckschicht und diesem Membranmaterial festgestellt werden.

Das in den genannten Legierungen enthaltene Tantal und auch wenige Anteile des Titans können durch Niob in Mengen bis zu 25 Gew.% ersetzt werden. Es erscheint auch möglich, wenn auch weniger günstig für kerntechnische Zwecke, den Kupferanteil teilweise durch Silber zu ersetzen.

Um eine Abnahme der Wirkungsweise der Diffusionsmembran aufgrund von Oxidationsphänomenen zu unterdrücken, wird für die Membran selbst vorzugsweise eine Dreischichtstruktur mit einer inneren hydridhaltigen Schmelze (als Zwischenschicht) vorgesehen, die vorzugsweise kontinuierlich erneuert wird. Bei einer solchen Dreischichtmembran befindet sich zwischen zwei Diffusionsmembranen der vorstehend näher beschriebenen Art in einem zwischen beiden vorgesehenen dünnen Spalt eine Schmelze, die ein Alkali- oder Erdalkalimetallhydrid enthält. Beispielsweise und vorzugsweise benutzt man Lithiumhydrid mit einem seiner Halogenide als eutektische Schmelze. Eine Mischung aus 24 Mol-% LiH mit Lithiumjodid schmilzt bei 391 °C, eine weitere aus 30 Mol-% LiH mit Lithiumbromid bei 454 °C und die entsprechende chloridhaltige Mischung mit 34 Mol-% LiH bei 496 °C. Diese Schmelzen besitzen bekanntlich eine hohe Ionenleitfähigkeit für $H^{(-)}$ und sorgen gleichzeitig dafür, dass die in diesem Fall möglichst dünnen Membranen – von etwa 80 bis 200 μm, vorzugsweise von etwa 100 μm Dicke, im Inneren auch bei langen Betriebszeiten sauerstofffrei bleiben. Diese Ausführungsform ist insbesondere dann günstig, wenn das primärseitige Gasgemisch Wasserstoff mit Partialdrücken von mehreren bar enthält. Die Druckdifferenz im Gasgemisch zum reinen Wasserstoff auf der Sekundärseite stellt die Triebkraft zur Wasserstoffpermeation durch beide Membranen und durch die Schmelze dar. Die Dicke der hydridhaltigen Schmelze-Zwischenschicht liegt zwischen etwa 10 und einigen 100 µm, vorzugsweise zwischen 50 und 100 µm.

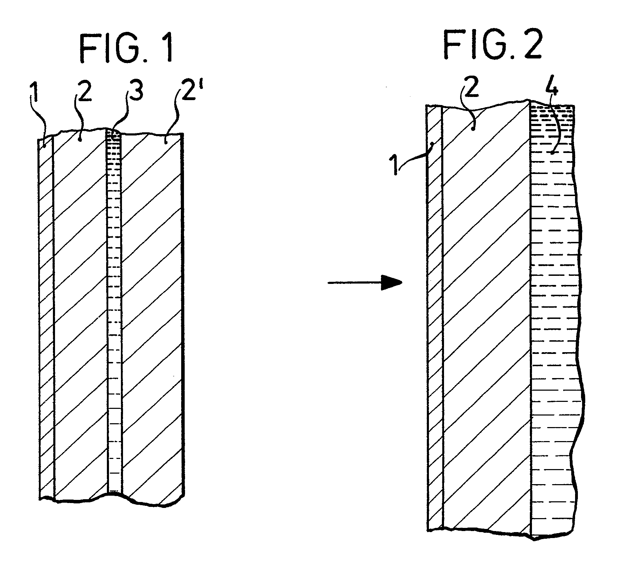

Die beigefügte Figur 1 zeigt schematisch den Aufbau einer solchen Diffusionsmembran mit der Palladium-Legierungsschicht 1 auf dem kupfer-, silber- bzw. yttriumgesättigten Membranmaterial 2, 2′ und einer Schmelze-Zwischenschicht 3.

Bei der praktischen Anwendung der erfindungsgemässen Membranen aus Cu-, Ag- bzw. Y-gesättigtem Material mit Palladiumkupfer- bzw. Palladiumsilber- bzw. Palladiumyttriumbeschichtung zur Abtrennung von Wasserstoff durch Diffusion treten nun insbesondere bei Betrieb bei erhöhten Temperaturen und bei der Abtrennung von nun sehr geringen Mengen an Wasserstoff – in Form von leichtem Wasserstoff oder seinen Isotopen – wie sie zum Beispiel im primären Kühlgas eines Kernreaktors vorliegen, Schwierigkeiten auf, da über längere Zeiten hinweg selbst geringe Verunreinigungen der primären oder sekundären Gasräume wie mit Wasserdampf oder oxidierenden Verbindungen zu Störungen führen, wie etwa Oxidschichtbildungen (auf der Sekundärseite) mit entsprechender Hemmwirkung auf die Diffusion oder einer negativen Beeinflussung der Diffusionsvorgänge überhaupt.

Vorzugsweise wird daher mit einer erfindungsgemässen PdAg- bzw. PdCu- bzw. PdY-beschichteten Membran sekundärseitig Alkalimetall und/oder Erdalkalimetall enthaltende Schmelze in Kontakt gebracht, deren Affinität zum Wasserstoff höher ist als diejenige der beschichteten Membran sowie der Wasserstoffbindungspartner auf der Primärseite und die Alkali- und/oder Erdalkalimetallhydrid in Form einer Aufschlämmung oder in gelöster Form bildet.

Die Alkalimetall und/oder Erdalkalimetall enthaltende Schmelze sorgt aufgrund ihrer höheren Wasserstoffaffinität für eine Wasserstoffsenke auf der Sekundärseite mit entsprechend positiver Wirkung auf die Wasserstoffdurchtrittsgeschwindigkeit durch die Wand sowie für die Unterdrückung einer Versprödung des Wandmaterials durch Hydridbildung, wie etwa durch Zyrkoniumhydrid, die durch Calciumanwesenheit verhindert werden kann oder auch durch umfangreichere Tantalhydridbildungen, die durch Alkalimetall gehemmt werden können. Gleichzeitig wird durch die Schmelze verhindert, dass sich Hemmschichten auf der Austrittsseite der Wand, wie etwa Oxidschichten, bilden.

Bei der Auswahl der Schmelze wird ferner darauf geachtet, dass ihre Affinität zum Wasserstoff höher ist als diejenige der primärseitigen Bindungspartner des Wasserstoffs (d.h. üblicherweise des Wasserstoffs selbst, der vorwiegend als $H_2$ bzw. HT im Primärgas vorliegt).

Die erfindungsgemässe Abtrennung von Wasserstoff aus Gasgemischen erfolgt vorzugsweise in einer Anordnung, bei der die Diffusionswände nach Art der Austauschwände eines Wärmetauschers vorzugsweise nach Art eines Plattenwärmetauschers angeordnet sind, in dem die von Wasserstoff zu befreiende Gasmischung und die den diffundierenden Wasserstoff aufnehmende Schmelze insbesondere im Gegenstrom zueinander auf der Primär- bzw. Sekundärseite der Diffusionswände entlang bewegt werden, wobei die Schmelze zum Beispiel in dünner Schicht durch einen engen Spalt auf der Sekundärseite strömt und nach Beladung mit Wasserstoff über eine entsprechende Regenerierungseinrichtung geleitet und im Kreislauf wieder zurückgeführt werden kann.

Die beigefügte Figur 2 zeigt schematisch den Aufbau einer Diffusionswand 2 mit sekundärseitig angrenzender Schmelze 4 sowie der Palladium-Legierungsschicht 1 auf die Gaszutrittsseite.

Zur Veranschaulichung der Erfindung werden nachfolgend einige Ausführungsvarianten beschrieben:

1. Aufgrund der Affinität zu Wasserstoff wird man im $H_2$-Partialdruckbereich von etwa 1 mb bis zu etwa 30 b bei Temperaturen von etwa 180 °C bis etwa 450 °C, vorzugsweise bei etwa 220 °C bis 350 °C, als Membran oder Diffusionswand Pd/Cu- oder möglicherweise auch Pd/Ag-beschichtetes Tantal oder Niob und als sekundärseitige Schmelze die selbst bei Umgebungstemperatur flüssige Natrium-Kaliumlegierung (NaK) einsetzen, die keine Verunreinigungen an Stickstoff und Kohlenstoff enthalten sollte. Kalium- und Natriumhydrid werden als Produkt in Form einer Aufschlämmung erhalten.

Sauerstoffanteile, die zu Korrosionserscheinungen des Membranmaterials führen können, lassen sich durch Zusätze des bis zur Grössenordnung von etwa einem Mol-% im NaK-löslichen Magnesiums gettern. Eine Sauerstoffaufnahme kann auch mit Hilfe von Lithium oder einer lithiumhydridhaltigen Schmelze erreicht werden, von denen bekannt ist, dass damit sogar der in metallischem Zirkon gelöste Sauerstoff herausgelöst werden kann.

Unter den vorstehend genannten Bedingungen sind Wasserstoffstromdichten von mehreren $10^{-6}$ Mol$H_2$/cm²s erreichbar.

2. Im Wasserstoffpartialdruckbereich eines Gasgemisches von etwa $10^{-6}$ b bis etwa $10^{-3}$ b bei Temperaturen von etwa 300 °C bis 450 °C, vorzugsweise etwa 350 °C ist Lithium in schmelzflüssiger Form als Akzeptor von Wasserstoff und seinen Isotopen geeignet. Man wählt die Membranmaterialien wie bei (1). Zur Abtrennung von Wasserstoff (H bzw. T) aus dem HTR-Primärkreis müsste weitestgehend reines Isotop $^7$Li vorgesehen werden. Nachfolgend (3) wird deshalb die kostengünstigere Lösung vorgestellt.

3. Als Membranmaterial wird der oben beschriebene Legierungstyp von Kupfer mit Ta/Ti/V und gegebenenfalls Niob vorgesehen und gasseitig mit etwa 0,5 bis etwa 20 µm vorzugsweise mit etwa 1 bis 5 µm Cu/Pd-Legierung beschichtet. Im gleichen Druckbereich wie bei (2), aber bei Temperaturen von etwa 450 °C bis 600 °C, vorzugsweise bei etwa 500 °C bis 550 °C, wird eine Schmelze sekundärseitig eingesetzt, die eine noch höhere Affinität zu Wasserstoff und seinen Isotopen besitzt als Lithium. Vorteilhafterweise verwendet man eine Schmelze von Erdalkalimetallen, in der Calcium löslich ist. Beispielsweise benutzt man eine Mischung aus Barium und Magnesium mit 66 Atom-% Barium, die bekanntlich bei 358°C schmilzt und in der Lage ist, hohe Anteile an Calcium aufzulösen. Man kann auch eine Calcium-Magnesium-Schmelze (flüssig bei 445°C mit 27 Atom-% Mg) einsetzen. Das Dreistoffsystem Ba/Mg/Ca ist im Hinblick auf seine Affinität zu Wasserstoff und seine Isotopen aber günstiger.

Es ist natürlich auch möglich (insbesondere für konventionelle Anwendungen), die Membranen aus (3) mit Lithium als Wasserstoffakzeptor bei Wasserstoffpartialdrücken bis zu etwa 100 mb und bis etwa 600°C zu betreiben. Auch weitere Kombinationen Membran/Schmelze der angegebenen Varianten untereinander sind möglich, so dass man für jeden Anwendungsfall eine geeignete Auswahl treffen kann.

Die mit Palladiumlegieruno beschichtete Diffusionsmembran gemäss der Erfindung kann insbesondere auch in einer Doppelmembrananordnung mit nach aussen weisender Primärseite und mit Schmelze versehener innerer Sekundärseite vorgesehen werden.

Es gehört selbstverständlich zu den Varianten (1), (2) und (3), dass man den Wasserstoff (bzw. seine Isotope) aus den Schmelzen abtrennen kann. Es ist bekannt, dass man die erhaltenen aufgeschlämmten Hydride aus den Alkali- oder auch Erdalkalimetallschmelzen durch Absieben trennen kann.

Es ist weiterhin möglich, die Aufschlämmungen stark zu erhitzen und so gasförmigen Wasserstoff und seine Isotope durch thermische Abspaltung zu erhalten.

Eine weitere bekannte Methode besteht darin, die Aufschlämmung einem schmelzflüssigen Halogenidbad – z.B. nach Art einer Kolonne – zuzuführen, so dass das Hydrid herausgelöst wird und das vom Hydrid abgereicherte Alkali- oder auch Erdalkalimetall in die übrige Vorrichtung zurückgeführt wird. Diese Halogenid/Hydridschmelzen kann man bekanntlich mit Hilfe einer Elektrolyse behandeln, so dass man an der Kathode das Alkali- bzw. Erdalkalimetall zurückerhält, während Wasserstoff und seine Isotopen an der Anode gasförmig erhalten werden.

## Patentansprüche

1. Wasserstoff-Diffusionsmembran aus einem selektiv für Wasserstoff durchlässigen, nichtporösen Material mit einer Beschichtung aus einer Legierung von Palladium mit $\geqslant$ 45 Atom-% Cu oder $\geqslant$ 50 Atom-% Ag oder $\geqslant$ 7 Atom-% Y auf der Wasserstoffzutrittsseite der Membran aus einem Kupfer bzw. Silber bzw. Yttrium unter Verarmung der Beschichtung lösenden Material, dadurch gekennzeichnet, dass die Membran selbst den jeweiligen Legierungspartner Cu, Ag bzw. Y in einer mit der Palladiumlegierung bei Betriebstemperatur zumindest im Gleichgewicht befindlichen Konzentration aufweist.

2. Membran nach Anspruch 1, dadurch gekennzeichnet, dass die Membran selbst aus einem mit Kupfer bzw. Silber bzw. Yttrium bei Betriebstemperatur gesättigten Material besteht.

3. Membran nach Anspruch 1 oder 2, dadurch gekennzeichnet, dass die den Legierungspartner aufweisende Membran selbst aus einem Material auf Tantal- und/oder Niobbasis besteht.

4. Membran nach Anspruch 3, dadurch gekennzeichnet, dass die Membran selbst aus einer insbesondere mit Kupfer bei Betriebstemperatur gesättigten Legierung von 10 bis 30 Gew.% Titan, 3 bis 10 Gew.% Vanadium, 0 bis 25 Gew.% Niob und wenigstens 30 Gew.% Tantal besteht.

5. Membran nach Anspruch 4, dadurch gekennzeichnet, dass die Membran selbst aus einer an Kupfer bei Betriebstemperatur gesättigten Legierung von 20 bis 25 Gew.% Titan, 5 bis 7,5 Gew.% Vanadium, 0 bis 15 Gew.% Niob und mindestens 50 Gew.% Tantal besteht.

6. Membran nach einem der vorangehenden Ansprüche, insbesondere der Ansprüche 3 bis 5, dadurch gekennzeichnet, dass die Membran selbst eine Dreischichtstruktur mit einer inneren Zwischenschicht in Form einer Alkali- und/oder Erdalkalimetallhydrid bildenden oder enthaltenden Schmelze aufweist.

7. Membran nach Anspruch 6, dadurch gekennzeichnet, dass die Zwischenschicht durch eine Lithiumhydrid mit einem seiner Halogenide in eutektischer Mischung enthaltende Schmelze gebildet wird.

8. Membran nach einem der vorangehenden Ansprüche, gekennzeichnet durch eine zusätzliche Palladiumkupfer- bzw. Palladiumsilber- bzw. Palladiumyttrium-Legierungsschicht auf der Wasserstoffaustrittsseite.

9. Verfahren zur Abtrennung von Wasserstoff aus Gasgemischen durch Diffusion bei erhöhter Temperatur durch eine Membran mit einer primärseitigen Beschichtung mit einer Palladiumlegierung, dadurch gekennzeichnet, dass man eine Membran nach einem der Ansprüche 1 bis 7 verwendet und sekundärseitig mit der Membran eine Alkalimetall und/oder Erdalkalimetall enthaltende Schmelze in Kontakt bringt, deren Affinität zum Wasserstoff höher ist als diejenige des Wandmaterials sowie der Wasserstoffbindungspartner auf der Primärseite und die Alkali- und/oder Erdalkalimetallhydrid in Form einer Aufschlämmung oder in gelöster Form bildet.

10. Verfahren nach Anspruch 9, dadurch gekennzeichnet, dass man als Schmelze eine Alkalimetallschmelze, insbesondere eine NaK-Mischung oder flüssiges Lithium, vorsieht.

11. Verfahren nach Anspruch 9, dadurch gekennzeichnet, dass man als Schmelze Erdalkalimetalle oder diese enthaltende Mischungen und insbesondere eine eutektische Schmelze von Barium und Magnesium vorsieht, in welch letzterer Calcium mit bis zu 30 Atom-% gelöst ist.

12. Verfahren nach einem der Ansprüche 9 bis 11, dadurch gekennzeichnet, dass die gebildete Wasserstoffverbindung durch Aussieben aus der Schmelze entfernt oder durch thermische Abspaltung des Wasserstoffs zum Metall regeneriert wird.

13. Verfahren nach einem der Ansprüche 9 bis 11, dadurch gekennzeichnet, dass man die erzeugte Wasserstoffverbindung durch Auflösen in einer Halogenidschmelze abtrennt, die vorzugsweise durch Schmelzflusselektrolyse aufgearbeitet wird.

**Claims**

1. Hydrogen diffusion membrane made of a nonporous material selectively pervious to hydrogen, with a coating of an alloy of palladium with $\geqslant 45\%$ at. Cu or $\geqslant 50\%$ at. Ag or $\geqslant 7\%$ at. Y at the hydrogen access side of the membrane made of a material dissolving copper or silver or yttrium with impoverishment of the coating, characterised in that the membrane itself has the respective alloy partner Cu, Ag or Y in a concentration which is at least in equilibrium with the palladium alloy at operating temperature.

2. Membrane according to claim 1, characterised in that the membrane itself consists of a material saturated with copper or silver or yttrium at operating temperature.

3. Membrane according to claim 1 or 2, characterised in that the membrane having the alloy partner itself consists of a material with a tantalum and/or niobium base.

4. Membrane according to claim 3, characterised in that the membrane itself consists of an alloy, saturated especially with copper at operating temperature, of 10 to 30% by weight titanium, 3 to 10% by weight vanadium, 0 to 25% by weight niobium and at least 30% by weight tantalum.

5. Membrane according to claim 4, characterised in that the membrane itself consists of an alloy, saturated with copper at operating temperature, of 20 to 25% by weight titanium, 5 to 7.5% by weight vanadium, 0 to 25% by weight niobium and at least 50% by weight tantalum.

6. Membrane according to one of the preceding claims, especially one of claims 3 to 5, characterised in that the membrane itself has a three-layer structure with an inner intermediate layer in the form of a melt containing or forming alkali metal and/or alkaline earth metal hydride.

7. Membrane according to claim 6, characterised in that the intermediate layer is formed of a melt containing lithium hydride with one of its halides in eutectic mixture.

8. Membrane according to one of the preceding claims, characterised by an additional palladium and copper or palladium and silver, or palladium and yttrium alloy layer at the hydrogen exit side.

9. Process for separating hydrogen from gas mixtures by diffusion at elevated temperature through a membrane with a primary-side coating with a palladium alloy characterised in that a membrane according to one of claims 1 to 7 is used and at the secondary side there is brought into contact with the membrane a melt which contains alkali metal and/or alkaline earth metal and whose affinity with hydrogen is greater than that of the wall material and of the hydrogen bond partners at the primary side and which forms alkali metal and/or alkaline earth metal hydride in the form of a suspension or in dissolved form.

10. Process according to claim 9, characterised in that an alkali metal melt, especially a NaK mixture or liquid lithium, is provided as the melt.

11. Process according to claim 9, characterised in that as the melt there are provided alkaline earth metals or mixtures containing these, and especially an eutectic melt of barium and magnesium in which latter melt calcium with up to 30% at. is dissolved.

12. Process according to one of claims 9 to 11, characterised in that the hydrogen compound formed is removed from the melt by screening or regeneration giving the metal again is effected by thermal separation of the hydrogen.

13. Process according to one of claims 9 to 11, characterised in that the hydrogen compound produced is separated off by dissolving in a halide melt which is worked up preferably by fusion electrolysis.

**Revendications**

1. Membrane de diffusion de l'hydrogène, en une matière non poreuse, perméable sélectivement à l'hydrogène, ayant un revêtement en un alliage de palladium ayant un pourcentage atomique de Cu supérieur ou égal à 45% ou un pourcentage atomique d'Ag supérieur ou égal à 50%, ou un pourcentage atomique d'Y supérieur ou égal à 7%, du côté d'accès de l'hydrogène à la membrane qui est en matière dissolvant du cuivre, d'argent ou d'yttrium en appauvrant le revêtement, caractérisée en ce que la membrane elle-même comporte le constituant d'alliage Cu, Ag ou Y, en une concentration se trouvant au moins en équilibre avec l'alliage de palladium à la température de fonctionnement.

2. Membrane suivant la revendication 1, caractérisée en ce que la membrane elle-même est en une matière saturée de cuivre ou d'argent ou d'yttrium à la température de fonctionnement.

3. Membrane suivant la revendication 1 ou 2, caractérisée en ce que la membrane elle-même, comportant le constituant d'alliage, est en une matière à base de tantale et/ou de niobium.

4. Membrane suivant la revendication 3, caractérisée en ce que la membrane elle-même est en un alliage saturé, notamment de cuivre, à la température de fonctionnement, comprenant de 10 à 30% en poids de titane, de 3 à 10% en poids de vanadium, de 0 à 25% en poids de niobium et au moins 30% en poids de tantale.

5. Membrane suivant la revendication 4, caractérisée en ce que la membrane elle-même est en un alliage saturé de cuivre, à la température de fonctionnement, comprenant de 20 à 25% en poids de titane, de 5 à 7% en poids de vanadium, de 0 à 25% en poids de niobium et au moins 50% en poids de tantale.

6. Membrane suivant l'une des revendications précédentes, notamment les revendications 3 à 5, caractérisée en ce que la membrane elle-même présente une structure à trois couches, avec une couche intermédiaire intérieure sous forme d'une masse fondue formant ou contenant un hydrure de métal alcalin et/ou un hydrure de métal alcalino-terreux.

7. Membrane suivant la revendication 6, caractérisée en ce que la couche intermédiaire est formée d'une masse fondue contenant un hydrure de lithium avec l'un de ses halogénures en mélange eutectique.

8. Membrane suivant l'une des revendications précédentes, caractérisée par une couche d'alliage supplémentaire en palladium-cuivre ou en palladium-argent ou en palladium-yttrium du côté de la sortie de l'hydrogène.

9. Procédé pour séparer de l'hydrogène dans des mélanges gazeux, par diffusion à température élevée à travers une membrane ayant un revêtement du côté primaire, en un alliage de palladium, caractérisé en ce qu'il consiste à utiliser une membrane suivant l'une des revendications 1 à 7, et à mettre en contact, avec la membrane du côté secondaire, une masse fondue contenant un métal alcalin et/ou un métal alcalino-terreux, dont l'affinité pour l'hydrogène est plus grande que celle de la matière constituant la paroi, ainsi que celle du constituant du composé de l'hydrogène du côté primaire, et qui forme d'hydrure de métal alcalin et/ou d'hydrure de. métal alcalino-terreux sous forme d'une suspension ou à l'état dissous.

10. Procédé suivant la revendication 9, caractérisé en ce qu'il consiste à prévoir, comme masse fondue, un métal alcalin fondu, notamment un mélange de NaK ou du lithium liquide.

11. Procédé suivant la revendication 9, caractérisé en ce qu'il consiste à prévoir, comme masse fondue, des métaux alcalino-terreux ou des mélanges les contenant et notamment une masse fondue eutectique de baryum et de magnésium, dans laquelle du calcium est dissous jusqu'à un pourcentage atomique de 30%.

12. Procédé suivant l'une des revendications 9 à 11, caractérisé en ce qu'il consiste à éliminer le composé hydrogéné formé de la masse fondue par tamisage, ou à le régénérer en métal par élimination de l'hydrogène par la chaleur.

13. Procédé suivant l'une des revendications 9 à 11, caractérisé en ce qu'il consiste à séparer le composé hydrogéné produit par dissolution dans une masse fondue d'halogénure, qui est retraitée de préférence par électrolyse en fusion.

## FIG. 1

## FIG. 2